# EUROPEAN PATENT SPECIFICATION

(11) **EP 1 790 517 B1**
(45) Date of publication and mention of the grant of the patent: **24.03.2010**
(21) Application number: 06256016.4
(22) Date of filing: 24.11.2006
(51) Int. Cl.: B60K 15/04

(54) **Misfuelling prevention device**
Vorrichtung zum Verhindern einer Falschbetankung mit Brennstoff
Dispositif pour éviter les erreurs de ravitaillement en carburant

(30) Priority: 26.11.2005 GB 0524168
(43) Date of publication of application: 30.05.2007
(73) Proprietor: The University of Wolverhampton, Wolverhampton WV1 1SB (GB)
(72) Inventor: White, Martin E., Somerset, BA22 8JE (GB)
(74) Representative: Gosnall, Toby

(56) References cited:
- EP-A1- 1 262 355
- EP-A1- 1 284 212
- DE-A1- 4 243 883
- DE-C1- 10 157 090
- FR-A1- 2 741 014
- US-A1- 2002 020 465

## Description

This invention relates to a device for preventing the misfuelling of a vehicle. In particular, it relates to a device that is mounted in the refuelling point of a vehicle and prevents a nozzle of a refuelling device being inserted into the refuelling point unless it is of appropriate dimensions.

Motor vehicles use different types of internal combustion engines, such as petrol engines or diesel engines, and accordingly require different fuels. The majority of motor vehicles require either petrol fuel (also known as gasoline) or diesel fuel that is stored in a tank. Such vehicles have fuelling points typically comprising an aperture in the vehicle through which fuel is delivered to the fuel tank. The term motor vehicle is primarily intended to include cars and vans, but can cover a variety of vehicles that have internal combustion engines and thus require fuel to operate; such as motorbikes, scooters, lorries, certain agricultural and industrial vehicles and the like.

Typically petrol and diesel fuels are dispensed from nozzles that are located adjacent to one another at a pump on a garage forecourt, for example. The separate nozzles may be labelled and coloured differently so that a user can select the appropriate fuel for their motor vehicle. However, the inappropriate fuel can be selected by mistake. The filling of a vehicle's fuel tank with the wrong type of fuel presents a significant problem. The filling of a diesel motor vehicle with petrol has serious consequences. Diesel-based motor vehicles rely upon the lubricating properties of diesel fuel to maintain the pumps and metering devices in the fuel system. If these are contaminated with petrol fuel, insufficiently lubricated metal-to-metal contact will quickly occur, producing fine swarf, which can destroy engine components. This can even occur if the ignition of the vehicle is switched on but the engine is not started, as the fuel pump that delivers fuel to the engine is typically driven electrically.

A common feature of the nozzles of petrol and diesel pumps in the United Kingdom, Europe and many other countries, is that the nozzle of a petrol pump is of a smaller diameter than the nozzle of a diesel pump. In particular, a European standard (and some other International standards) states that the diameter of a nozzle for a diesel fuelling pump must be greater than 23.6mm and the diameter of a nozzle for a petrol fuelling pump must be less than 21.3mm. Accordingly, the fuelling point of petrol vehicles is smaller than that on diesel vehicles. Thus, the nozzle of a diesel pump will usually be too large to fit within the fuelling point of a modern petrol-based vehicle, but the nozzle of a petrol pump will easily be accommodated by the fuelling point of a diesel vehicle. Thus it is more common for diesel motor vehicles to be misfuelled with petrol fuel than petrol vehicles with diesel fuel.

The closest prior art document is EP 1262355 which discloses a pivoting closure flap, to prevent insertion of a smaller diameter nozzle, having a locking hook that is released by insertion of a large diameter filler pistol in accordance with the preamble of claim 1. EP 1284212 discloses a vehicle fuel tank with a filler pipe whose inlet is restricted by swivelling plates and the plates can be pushed apart when a large diameter diesel pump nozzle is inserted, but not by a petrol nozzle of smaller diameter.

According to the present invention, we provide a misfuelling prevention device according to claim 1.

This is advantageous as the user of the fuel pump is physically prevented by the barrier means from inserting the incorrect pump nozzle.

Preferably, release elements are equally circumferentially spaced around the body. Preferably the release means comprises three or four release elements. However, it will be appreciated that it may include 2, 5, 6, 7, 8 or more release elements.

Preferably, the locking means biases the actuating means to extend into the bore.

The use of a spherical release ball is advantageous as it can rotate due to its shape and will therefore cause minimal abrasion to the fuelling nozzle.

Preferably, the release elements interact with the barrier means via a common release member. The common release member is preferably a release collar, although it may comprise a cam.

Preferably, the locking means comprises a locking tab having a locking finger. Alternatively the locking means comprises a locking pin. Preferably, the locking means is attached to the common release member. The locking means may be adapted to engage with a ledge forming part of the channel in which the actuating means is mounted such that movement of the barrier means is prevented.

Preferably, the body comprises a casing and core section, the core section having a channel formed therein for the actuating means. Preferably, the core section includes a pivot means for mounting the barrier means thereto. Preferably the common release member is mounted between the casing and the core section.

Preferably, the barrier means comprises at least one flap that forms a barrier over the bore in the body. Preferably, the barrier means comprises three or four flaps, although, it may comprise 2, 6, 7, 8 or more flaps.

Preferably, the flaps can pivot about an axis in order to move between the barrier position and the open position. The pivot may comprise a pivot pin mounted to the body. Alternatively, the pivot may comprise a common pivot wire that passes through each flap to provide a pivot axis.

The flaps may comprise an inner flap portion and an outer flap portion separated by the pivot axis, the inner flap portion forming the barrier means and the outer flap portion adapted to abut the common release member. Preferably, the common release member has a shaped abutment surface with which the outer flap portion abuts. This is advantageous as the shape of the abutment surface can be selected to obtain the desired movement of the barrier means from the open position to the barrier position, with varying degrees of movement of the common release member. As space within the fuelling point is limited, this is advantageous as it allows a shallow body to be used. Further, it is preferable that on insertion of a nozzle of a fuelling pump, the common release member is arranged to move in a direction opposite to the direction of insertion of the nozzle. By arranging the common release member to interact with the barrier means that is pivotally mounted, the body can be made sufficiently shallow in axial height to enable it to fit in the fuelling point of a motor vehicle. Thus, the device can be fitted as an aftermarket device.

Preferably the device is secured to the fuelling point of a vehicle in place of the cap that covers the fuelling point. Accordingly, the device preferably also includes its own cap to seal the bore.

Preferably the body includes bayonet fixing means to secure the device to the fuelling point of a vehicle. Alternatively the body may be screw threaded to attach it to a complementary screw thread in the fuelling point.

Preferably the device is for the prevention of the misfuelling of a diesel vehicle with petrol fuel.

Preferably, the body has a conical surface surrounding the bore to guide a nozzle into the bore.

The barrier means may be axially aligned with the release means. Preferably, the release elements and the flaps are arranged alternately around the circumference of the device. The device can be made compact by mounting the release means and the flaps such that they are substantially axially aligned but circumferentially spaced, provided that a nozzle can actuate the release means prior to contacting the flaps of the barrier means.

Preferably, the barrier means is biased to the barrier position by a spring that acts through the common release member. Preferably, the outer flap portions are received within slots formed in the common release member. Alternatively, the outer flap portion or portions may abut a cam surface that is shaped to move the barrier means between the barrier position and the open position on rotation of the cam.

There now follows by way of example only a detailed description of the present invention with reference to the accompanying drawings in which;
**Figure 1** shows a side view in section of an embodiment of the misfuelling prevention device of the invention;
**Figure 2** shows a top view of the section X-X shown in Figure 1;
**Figure 3** shows a section through the embodiment of Figure 1 along line Y-Y;
**Figure 4** shows a side view in section of a second embodiment of the invention;
**Figure 5** shows a third embodiment of the invention;
**Figure 6** shows the embodiment of Figure 5 but with a nozzle of a diesel pump therein and the barrier means in an open position;
**Figure 7** shows a portion of the misfuelling prevention device according to a fourth embodiment of the invention;
**Figure 8** shows a portion of the misfuelling prevention device according to a fifth embodiment of the invention;
**Figure 9** shows a portion of the misfuelling prevention device according to a sixth embodiment of the invention;
**Figure 10** shows a portion of the misfuelling prevention device according to a seventh embodiment of the invention;
**Figure 11** shows a side view in cross section of an eighth embodiment of the device of the invention;
**Figure 12** shows a part-sectioned front view of the embodiment shown in Figure 11 with a fuelling nozzle inserted therein;
**Figure 13** shows the embodiment of Figure 11 having a fuelling nozzle inserted therein; and
**Figure 14** shows a clip used to secure the device of Figures 5 and 6 to a fuelling point of a vehicle.

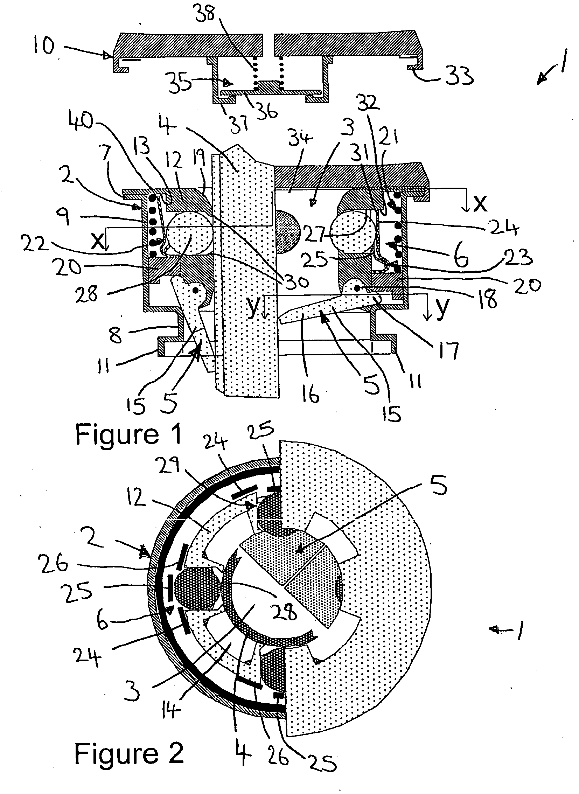

An embodiment of a misfuelling prevention device 1 is shown in Figure 1. The device 1 is adapted to be mounted within the fuelling point (not shown) of a motor vehicle. The device 1 shown in Figure 1 is adapted to replace a conventional fuelling point closure cap that seals the fuelling point. Thus, the device 1 can be easily retrofitted to motor vehicles thereby preventing the vehicle being misfuelled. Although the embodiment described is adapted to be retrofitted in the refuelling point of a motor vehicle, the device is easily modified to be fitted as standard during manufacture of the motor vehicle. In particular, only the way in which the device is secured to the motor vehicle needs to be changed as discussed below.

The device 1 comprises a body 2 that includes a bore 3 therethrough to receive a nozzle 4 of a fuelling pump so that it can deliver fuel to the fuel tank of a motor vehicle (not shown). The body 2 houses barrier means 5 that block the bore 3 and at least prevent the nozzle 4 from being inserted fully into the bore 3. The body 2 also houses release means 6 that is adapted to allow the barrier means 5 to open only when a nozzle of appropriate dimensions is inserted therein and thus permit the passage of the nozzle 4 through the bore 3 so that it is able to deliver fuel. This is advantageous as the barrier means 5 will prevent a person inserting a pump nozzle of incorrect dimensions, such as the smaller diameter petrol fuelling nozzle, into the fuelling point of their vehicle, which will alert them to the fact that they are using the wrong type of fuel. Further, as the barrier means 5 covers the bore 3, even if the user attempts to deliver fuel without the nozzle 4 being fully inserted, the fuel that will "splash back" off the barrier means 5 will operate the safety cut-out system of the fuel pump, which will interrupt the delivery of fuel. Such cut-out systems are common in fuel delivery pumps and are designed to prevent the overfilling of a fuel tank that could result in spillage of flammable fuel, which is hazardous. Thus, such cut-out systems will be known to those skilled in the art and will not be described further herein. The misfuelling prevention device of the invention therefore provides an effective means of alerting a user and preventing the misfuelling of a motor vehicle.

The body 2 includes a casing 9 of substantially cylindrical form having an outwardly turned lip 7 at one longitudinal end and a smaller diameter section 8 at the other end. The lip 7 provides an engagement for a cap 10 that seals the fuelling point bore 3. The cap 10 is typically of minimal thickness as the device 1 and cap 10 in combination are designed to replace the manufacturer's cap that would originally have sealed the fuelling point. Accordingly, the lip 7 may have cut-outs therein to engage with engagement means on the cap 10 to enable it to be secured to the device 1 as discussed in more detail below. The smaller diameter section 8 includes bayonet pins 11 that project radially outwardly of the body 2 and adapted to secure the device 1 within the fuelling point of the motor vehicle in place of the original cap.

The body 2 also comprises a core section 12 mounted within the casing 9. The core is of machined metal, although it may be of cast metal or sufficiently hard plastics. The core section 12 provides a mounting for the barrier means 5 and the release means 6. The core section 12 includes a radially outwardly extending lip 13 that extends to a diameter equal to that of lip 7 and is arranged to abut lie against the longitudinally outer surface of lip 7. The core also has a plurality of axially extending and equally circumferentially spaced channels 14 that extend between the barrier means 5 and the release means 6. When fuel is being delivered into the motor vehicles fuel tank, the channels 14 allow air and any froth that may form to escape to atmosphere. The core section 12 has an inwardly tapering conical surface 19 adjacent its open end 34. The surface 19 is adapted to guide the nozzle 4 of a fuelling pump into the bore 3.

The barrier means 5 comprises a plurality of flaps 15 that provide an obstruction in the bore 3 to prevent the insertion of the nozzle 4. In the embodiment of Figures 1 to 3, the barrier means comprises four flaps 15 equally circumferentially spaced around the bore 3. The flaps 15 are pivotally mounted to the core section 12 by pivot 18. The pivot 18 comprises a pivot pin that extends through an aperture in the flap 15 and is received by the core section 12. The flaps 15 thus pivot about an axis that is radially inwardly spaced from but tangential to the circumference of the casing 9. The each flap 15 comprises an inner flap portion 16 and an outer flap portion 17 separated by the pivot 18. The inner flap portion 16 is longer than the outer flap portion 17, as the pivot is located towards one end of the flap 15. Thus, when the flaps 15 are forming a barrier position, the inner flap portion 16 of each flap 15 extends substantially radially inwardly with the end of the inner flap portion 16 meeting at the axial centre of the bore 3. When the release means 6 permits the barrier means 5 to open, the inner flap portions 16 of the flaps 15 pivot such that they adopt an open position where they lie against the inside surface of the smaller diameter section 8, thereby allowing the nozzle 4 to be fully inserted into the bore 3.

The release means 6 comprises an annular release collar 20 that is mounted between the casing 9 and the core section 12. The collar 20 can slide axially in between the casing 9 and core section 12, but is urged against the outer flap portions 17 of the flaps 15 by a spring 21. The other end of spring 21 abuts the inner surface of lip 13 of the core section 12. The force exerted by the spring 21 on the collar 20 and thus on the outer flap portions 17, causes the inner flap portions 16 to form a barrier means in the bore 3, as shown in the right-hand side of Figure 1.

The release means 6 also includes locking means in the form of a plurality of locking tabs 22, each of which comprises a head portion 23 and having three fingers 24, 25, 26 extending therefrom. The fingers 24, 25, 26 extend adjacent to one another, with the outer fingers 24 and 26 extending substantially parallel to one another. The middle finger 25 forms a locking finger and is longer than the outer fingers 24 and 26. The head portion 23 abuts the collar 20 and outer fingers 24, 26 abut the core section 12.

The core section 12 has four radially extending channels or galleries 27 that are axially aligned with each of the four pivots 18 and flaps 15. Each of the channels 27 houses an actuating means in the form of a release ball 28. Each release ball 28 is able to slide radially in its respective channel 27 but is retained therein at one end by securing lips 30. The lips 30 extend into the channel 27 such that the diameter of the channel 27 is locally reduced adjacent the bore 3. The lips 30 are constructed and arranged such that a portion of the release ball 28 can project into the bore 3 while being retained in the channel 27. The balls 28 are retained in the channels 27 at the other end by the locking finger 25 of the locking tabs 22. Each locking tab 22 and release ball 28 forms a release element 29. Thus, the release means comprises four release elements 29, which all act on a common release member in the form of the collar 20.

Thus, the outer fingers 24, 26 abut the core portion 12 either side of the channel 27 and the locking finger abuts the release ball 28. The outer fingers 24, 26 ensure that each tab is appropriately positioned adjacent the release balls 28. The locking finger 25 of each tab 22 urges the ball 28 into contact with the lips 30. The free end 31 of the locking finger 28 is received under a ledge 32, which forms part of the channel 27. The locking finger 28 of the locking tabs 22 abutting the ledge 32 prevents the collar 20 moving in a direction against the force of the spring 21. Thus, the collar 20 is held in a locking condition in which it bears against the outer flap portions 17 thereby holding the inner flap portions 16 in a position blocking the bore 3 to prevent the insertion of a nozzle 4. Only when the locking fingers 28 of all of the locking tabs 22 are moved from under ledge 32 can the collar 20 move. Thus, on insertion of the nozzle 4 it will bear against the inner flap portions 16 that form a barrier across bore 3 and will prevented from being inserted further until all of the locking fingers 28 are displaced from under their respective ledges 32.

The cap 10 includes engagement means 33 for engaging with the lips 7 and 13 to secure the cap 10 over the open end 34 of the bore 3. The cap includes a pressure release valve 35 comprising a valve body 36 that is urged into contact with a valve seat 37 by a spring 38. Such a valve will be known to those skilled in the art and will not be described in more detail.

In use, the cap 10 is removed and the fuelling pump nozzle 4 is inserted into bore 3 and is guided therein by conical surface 19. The nozzle 4, if it is of sufficient dimensions, will directly act on the release balls 28 that project into the bore 3. Each of the release balls 28 will thus be urged radially outwardly along its channel 27 and will apply a force to its associated locking finger 25 of the tab 22. This will cause the locking finger 25 to move radially outwardly from under ledge 28. The nozzle 4 will abut the inner flap portions 16 on further insertion of the nozzle 4 into bore 3. Provided that all of the locking fingers 25 have been displaced from under ledges 32, the nozzle 4 will act on the inner flap portions 16 (urging them downwards as shown in the Figure) to adopt their open position. This will cause the outer flap portions 17 to act on collar 20 moving it against the force of spring 21. As the locking fingers 25 are displaced from their ledges 32, they also move with the collar 20 into a gap 40 defined by the core section 12, casing 9 and lip 13.

The locking fingers 25 will only all be displaced from under their respective ledges 32 if the nozzle 4 acts on all of the release balls 28. Thus, if one locking finger 25 has not been displaced from its ledge 32, it will prevent the movement of the collar 20, thereby holding the flaps 15 in the barrier position. Therefore, the size of the bore 3 and in particular its diameter, as well as the extent that the release balls 28 extend into the bore 3, is selected such that only a nozzle 4 of appropriate dimensions will be able to actuate all of the release balls 28 simultaneously allowing it to pass the barrier formed by the flaps 15. This invention is particularly applicable to vehicles having diesel engines, as a standard diesel fuelling nozzle is larger than a petrol fuelling nozzle. Thus, if the user inadvertently selects the petrol pump instead of the diesel pump, the petrol pump's smaller nozzle will not be able to actuate all of the release balls 28 and the flaps 15 will form a barrier to insertion of the nozzle in bore 4.

On withdrawal of the nozzle 4, the flaps 15 will return to their blocking position under the force of the spring 21, which acts through the collar 20 and outer flap portions 17. When each of the flaps 15 returns to the barrier position, the locking finger 25 will travel with the collar 20 out of gap 40 and will bear against the release balls 28. On further withdrawal of the nozzle 4, the release balls will be urged back into contact with the lip 30. Further, the locking finger 25 will be received by the ledge 32 and thus the flaps 15 will be locked in the barrier position.

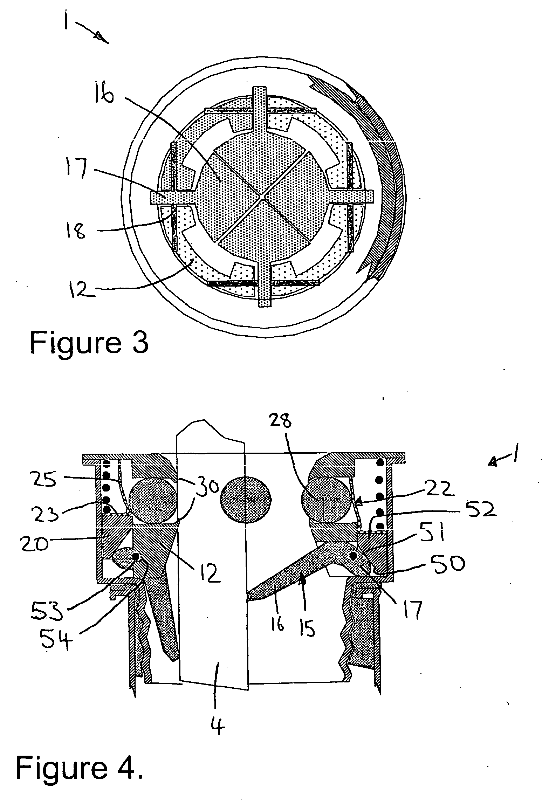

The second embodiment shown in Figure 4 is of substantially the same construction as the first embodiment except for some modification to the release means 6 and the shape of the flaps 15. Corresponding reference numerals have been applied to corresponding parts. In particular, the inner and outer flap portions 16, 17 are at substantially 90° to one another, with the pivot 18 formed between the portions 16, 17. The collar 20 is of annular construction having a rectangular cross-section, although in the second embodiment it has slots 50 positioned and adapted to receive the outer flap portions 17. The slots 50 are cut into the radially inner surface of the collar 20 and have an inclined surface 51 at their base. The locking tabs 22 in the second embodiment do not have the outer fingers 24, 26 and comprise only a single locking finger 25. The head portion 23 is no longer U-shaped but comprises a flat portion that abuts the collar and is secured thereto by a securing pin 52. The outer fingers 24, 26 in the first embodiment ensured that locking tabs 22 are correctly positioned to interact with the release balls 28. In this embodiment, the outer flap portions 17 being received in the slots 50 in the collar 20 prevent the collar 20 rotating and as such the tabs 22 can be fixed to the collar 20 and will be appropriately positioned. Further, each individual pivot 18 is replaced with a common circular wire 53 that provides a pivot for all of the flaps 15. The wire 53 is received within a circumferential groove 54 formed in the core section 12 and is secured therein by the radially inner surface of the collar 20. The wire 53 is split and is further secured against rotation by its ends being received within a blind bore (not shown) in the core portion 12. Operation of the device 1 is the same as the first embodiment.

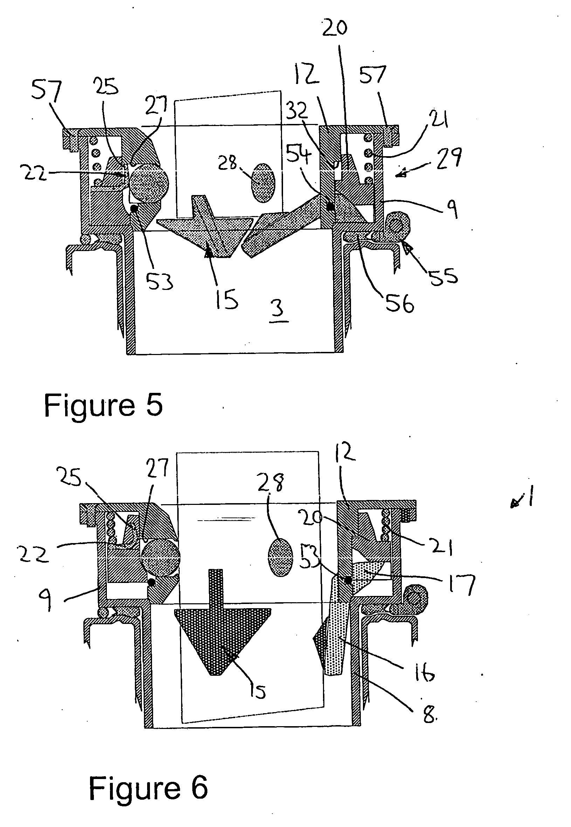

Figures 5 and 6 show a third embodiment having three flaps 15 equally circumferentially spaced. The flaps 15 of this embodiment are wider so that they form a barrier means in bore 3. This embodiment has three release elements 29. The release elements are not axially aligned with each of the flaps 15, and are instead spaced 60° from the flaps 15. The release elements 29 comprising the release balls 28, channels 27 and locking tabs 22 are thus located between the flaps 15. This arrangement allows for the device 1 to have an axially shorter casing 9, which is advantageous to allow the device to be retro-fitted in a fuelling point. Thus, by locating the release elements 29 between the flaps 15 and having these components interact by way of the common release member 20, the device 1 can be made sufficiently compact.

Further, in this embodiment, the device 1 includes a clip 55 and a sealing member 56. The clip 55 is tightened by a screw and fixes the device 1 to the fuelling point, preventing rotation and disengagement of the bayonet fitting or alternative screw threaded fixing used to mount the device 1 in the fuelling point. The lip 13 of the core section 12 is secured to the lip 7 of the casing 9 by screws 57. The locking tab 22 comprises an L-shaped member of spring steel that is mounted in a slot in the collar 20 and is retained by the spring 21. The flaps 15 are pivotally mounted by a circular wire 53 that is mounted in a groove 54 in the core section 12.

Figure 5 shows device 1 having a petrol pump nozzle 4 (shown in dashed lines) abutting the barrier means. The nozzle 4 is not of sufficient diameter to contact all three release balls 28 and therefore at least one release element 29 will not have been actuated thereby holding the flaps 15 in the barrier position. In Figure 6 a diesel pump nozzle 4 (shown in dashed lines) is shown in the bore 3. The diesel nozzle 4 is of sufficient diameter to actuate all of the release elements 29 thereby allowing the flaps 15 to open.

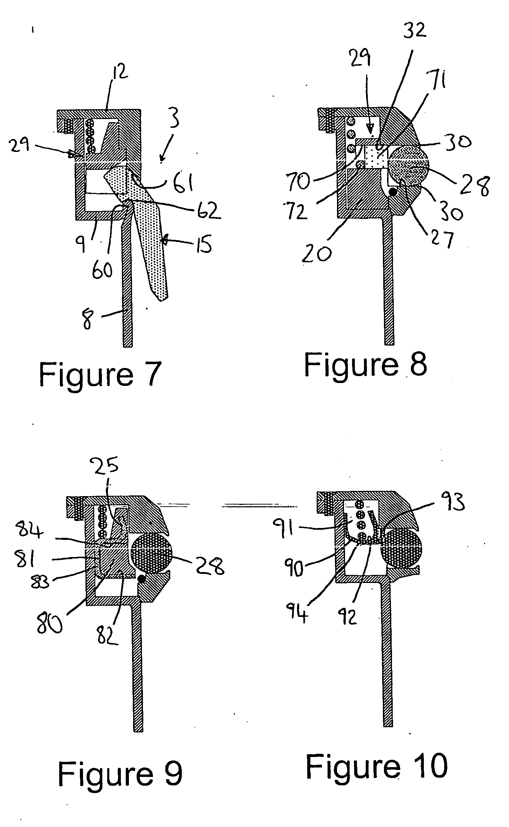

Figures 7 to 10 show different designs of the core portion 12, flaps 15 and release elements 29. Only one flap and release element is shown in each of the diagrams, although it will be appreciated that 2, 3, 4, 5, 6, 7, 8, 9 or 10 or more of these portions could form an embodiment of the misfuelling prevention device 1 of the invention.

Figure 7 is substantially identical to the arrangement shown in Figures 5 and 6 except that it includes a modified casing 9 and flaps 15. The casing 9 includes a rounded circumferential flange 60 that projects inwardly from the smaller diameter section 8 into the bore 3. The flange 60 forms a pivot surface, instead of the pivot pins of Figures 1 to 3 and the wire 53 of Figures 4 to 6. The core section 12 has a shaped terminal portion 61 that holds the flaps 15 on the notch 60 while allowing them to perform their range of movement from a barrier position to an open position. Accordingly, the flap 15 does not have a bore therethrough to receive the pivot, but instead has a rounded notch 62 complementary to the flange 60.

Figure 8 is a modification to the embodiment shown in Figures 5 and 6 and shows the collar 20 having a radially extending channel 70 therein. A locking pin 71 is slidable in the channel 70 and replaces the locking tabs 22. The final turn 72 of the spring 21 is of a smaller diameter than the remaining turns and acts on the locking pin 71 to urge it into contact with the release ball 28 to bias the ball 28 toward securing lips 30. The locking pin 71 engages with ledge 32 and will thus prevent movement of the collar 20 thereby locking the flaps (not shown in this embodiment) in the barrier position. On insertion of an appropriate nozzle 4, the radially outward movement of the release ball 28 will move the locking pin 71 out from under the ledge 32. Then collar 20 will then be permitted to move against the force of the spring 21 in response to a force applied by the nozzle to the flaps 15.

Figure 9 shows a modification to the collar 20 and locking tabs 22. In other aspects, however, this embodiment is similar to that shown in Figures 5 and 6. In this embodiment collar 20 is replaced by a combination of a collar core 80 and an outer collar 81. The outer collar 81 performs the function of the tabs 22 and thus includes a locking finger 25 integral therewith. The outer collar 81 is U-shaped and surrounds a lower face 82, an outer face 83 and an upper face 84 of the collar core 80. The locking finger 25 integral with the outer collar 81 extends adjacent each release ball 28, while remaining portions of the outer collar 81 comprise only the U-shaped part that surrounds the lower face 82, outer face 83 and upper face 84. As the outer collar 81 extends over the lower face 82 of the collar core 80, it provides a resilient surface for the outer flap portion 17 (not shown) to bear.

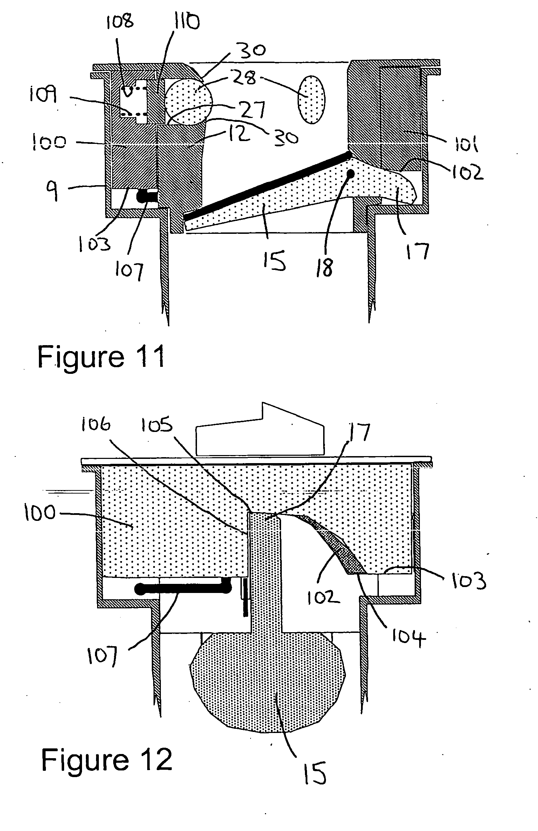

Figure 10 shows a modification to the embodiment of Figures 5 and 6 in which the collar 20 and release tabs 22 are replaced by an annular collar 90 of substantially U-shaped cross-section. The collar 90 is of spring steel and has a open portion 91 facing the spring 21. The spring 21 is received in a recess 92 of the collar 90. The collar 90 has a locking finger 93 integral therewith. The finger 93 is formed by two circumferentially spaced slots that are cut into the collar 90. The portion of the collar 90 between the spaced slots is then turned radially inwardly, such that it projects radially inwardly from the collar 90 thus forming the finger 93. The lower face 94 of the collar 90 is shaped to control the movement of the collar 90 in response to the movement of the outer flap portions (not visible) around the pivot (not visible). By appropriately shaping the lower face 94 of the collar 90, the travel of the collar 90 (i.e. vertical movement as shown in the Figure) in the casing 9 can be controlled. This is advantageous as if the casing needs to be shallow, the spring 21 and shape of the collar 90 can be modified so that the extent that the components need to move axially is limited. Figures 11, 12 and 13 show an eighth embodiment comprising a single flap 15 pivotally attached by pivot 18 to a core section 12. The collar 20 and locking tabs 22 are replaced by an annular cam 100. The cam 100 is adapted to rotate in the space between the casing 9 and the core section 12. It comprises a tubular member 101 having an arcuate cam surface 102 formed in the lower portion 103 of the cam 100 that extends part circumferentially around the cam 100. The arcuate cam surface 102 (shown best in Figure 12) extends from a first point 104 adjacent the lower portion 103 and terminates at a second point 105 defined by an axially extending surface 106. The surface 106 rejoins the lower portion 103 a circumferential distance from the first point 104. The outer flap portion 17 of the single flap 15 is adapted to cooperate with the cam surface 102. The cam 100 is biased against rotational movement by a coil spring 107 such that the outer flap portion 17 of the flap 15 abuts the first point 104 when the coil spring 107 is under minimal tension. The cam 100 includes radially extending blind bores 108 that house a spring 109 and a locking pin 110. The locking pins 109 are complementary to the channels 27 formed in the core portion 12 that house the release balls 28. Thus, the spring 109 acts through the locking pin 110 to urge the release balls against the lips 30 such that the balls 28 project into the bore 3 as in previous embodiments. The locking pins 110 extending between the blind bore 108 in the cam 100 and the channel 27 in the core section 12 prevents the cam 100 rotating. In this position, the outer flap portion 17 abuts the first point 104 of the cam surface 102.

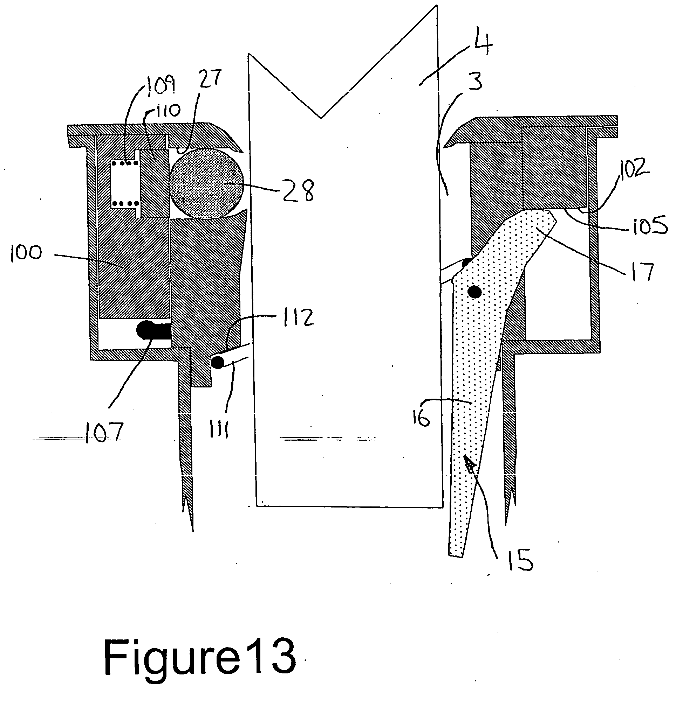

With reference to Figure 13, when all of the release balls 28 are urged radially outwardly by the presence of a nozzle 4, the locking pins 110 will be moved out of channels 27 which will allow the cam 100 to rotate. Thus, application of a force by the nozzle 4 on the flap 15 will urge the outer flap portion 17 against the cam surface 102. This, in turn, causes the cam 100 to rotate and the outer flap portion 17 will ride along the surface 102 until it reaches the second point 105. The cam is constructed and arranged such that when the outer flap portion 17 abuts the first point, the flap 15 is in the barrier position and when it abuts the second point 105, the flap 15 is in the open position. Withdrawal of the nozzle 4 from the bore 3 will cause the cam 100 to rotate under the influence of the coil spring 107. The flap 15 will therefore be moved into a barrier position as the cam surface 102 acts on the outer flap portion 17 from the second point 105 through to the first point 104. Once the first point is reached, the locking pins 110 will align with channels 27 and under the influence of spring 109, extend therein, once again locking the cam 100 against rotation. In the barrier position, the flap 15 seals against a sealing member 111 comprising an O-ring that is secured to the core section 12. The core section 12 includes a ledge 112 to which the sealing member 111 is partly attached. The ledge 112 and shaped internal surface of the core-section (not visible) ensures that the single flap 15 can effectively seal and form a barrier means across the bore 3.

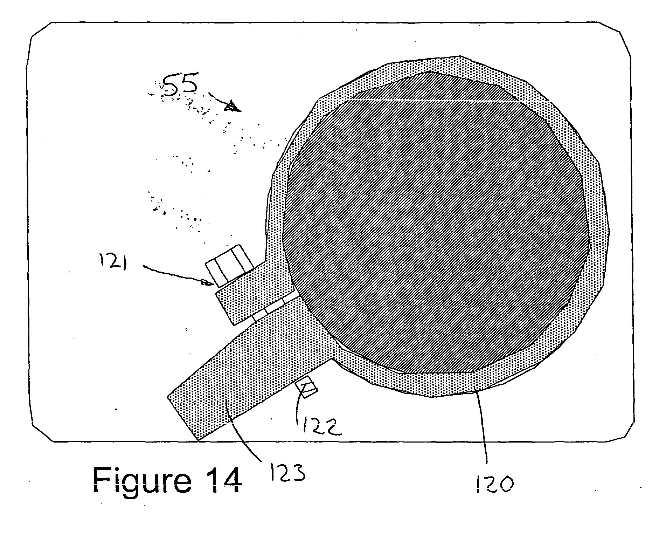

Figure 14 shows a plan view of a clip 55 used to secure the device to the fuelling point of a vehicle. The clip 55 comprises a ring shaped body 120 that is split and includes a tightening means 121. The tightening means 121 comprises a screw 122 that can adjust the diameter of the body 120, thus tightening the clip 55. The clip 55 includes an arm 123 that prevents the device rotating when placed on the confines of a fuelling point such that the device 1 cannot work loose.

Once the device 1 is secured to the vehicle fuelling point, it may only be removed with a special tool. This ensures that a user must make a conscious decision to remove the device 1.

## Claims

1. A misfuelling prevention device comprising a body (2) that is arranged to be mounted within the refuelling point of a motor vehicle, the body (2) comprising:
a bore (3) therethrough for receiving the nozzle (4) of the fuelling pump and delivering fuel to the vehicle to which the device (1) is attached;
barrier means (5) movable between a barrier position and an open position, wherein in the barrier position a nozzle (4) of a fuelling pump is prevented from being at least fully inserted into the refuelling point, and release means (6) arranged to act on the barrier means (5) to allow the barrier means (5) to adopt the open position and thereby permit the insertion of the nozzle (4), the release means (6) being arranged to allow the opening of the barrier means (5) when a nozzle (4) of predetermined dimensions is inserted into the fuelling point;
the release means (6) comprising a plurality of release elements (29) that must all be actuated to allow the opening of the barrier means (5); the release elements (29) comprising an actuating means (28) and a locking means (22, 71, 93, 110), the locking means (22, 71, 93, 110) arranged to prevent the barrier means (5) moving from the barrier position to the open position, and the actuating means (28) extending into the bore (3);
the actuating means (28) being arranged to contact a nozzle (4) inserted into the device (1) and act on the locking means (22, 71, 93, 110) to unlock the locking means (22, 71, 93, 110) thus allowing the barrier means (5) to move from the barrier position to the open position;
**characterised in that** the actuating means (28) comprises a spherical release ball (28) that is slidable in a radially extending channel (27) formed in the body (2).

2. A misfuelling prevention device according to claim 1, in which the release elements (29) are equally circumferentially spaced around the body (2).

3. A misfuelling prevention device according to claim 1 or claim 2, in which the release means (6) comprises three release elements (29).

4. A misfuelling prevention device according to claim 1 or claim 2, in which the release means (6) comprises four release elements (29).

5. A misfuelling prevention device according to any preceding claim, in which the locking means (22, 71, 93, 110) biases the actuating means (28) to extend into the bore (3).

6. A misfuelling prevention device according to any preceding claim, in which the release elements (29) interact with the barrier means (5) via a common release member (20, 100, 80 and 81, 90).

7. A misfuelling prevention device according to claim 6, in which the common release member is a release collar (20, 80 and 81, 90).

8. A misfuelling prevention device according to claim 6, in which the common release member is a cam (100).

9. A misfuelling prevention device according to any preceding claim, in which the locking means comprises a locking tab (22) having a locking finger (25, 93).

10. A misfuelling prevention device according to any preceding claim, in which the locking means comprises a locking pin (71, 110).

11. A misfuelling prevention device according to any of claims 6 to 10, in which the locking means (22, 71, 93, 110) is attached to the common release member (20).

12. A misfuelling prevention device according to any preceding claim, in which the locking means (22, 71, 93, 110) is adapted to engage with a ledge (32) forming part of the channel (27) in which the actuating means (28) is mounted such that movement of the barrier means (5) is prevented.

13. A misfuelling prevention device according to any preceding claim, in which the body (2) comprises a casing (9) and core section (12), the core section having the radially extending channel (27) formed therein for the actuating means (28).

14. A misfuelling prevention device according to claim 13, in which the core section (12) includes a pivot means (18, 53) for mounting the barrier means (5) thereto.

15. A misfuelling prevention device according to claim 13 or claim 14, in which the common release member (20, 90, 100) is mounted between the casing (9) and the core section (12).

16. A misfuelling prevention device according to any preceding claim, in which the barrier means (5) comprises at least one flap (15) that forms a barrier over the bore (3) in the body (2).

17. A misfuelling prevention device according to any preceding claim, in which the barrier means (5) comprises three flaps (15).

18. A misfuelling prevention device according to any preceding claim, in which the barrier means (5) comprises four flaps (15).

19. A misfuelling prevention device according to any preceding claim, in which the barrier means (5) comprises one flap (15).

20. A misfuelling prevention device according to claim 14, in which the pivot means comprises a pivot pin (18) mounted to the body (2).

21. A misfuelling prevention device according to claim 14, in which the pivot means comprises a common pivot wire (53) that passes through each flap (15) to provide a pivot axis.

22. A misfuelling prevention device according to any of claims 16 to 21, in which the flaps (15) comprise an inner flap portion (16) and an outer flap portion (17) separated by a pivot axis, the inner flap portion (16) forming the barrier means (5) and the outer flap portion (17) adapted to abut the common release member (20, 94, 100).

23. A misfuelling prevention device according to claim 22, in which the outer flap portions (17) are received within slots (50) formed in the common release member (20).

24. A misfuelling prevention device according to claim 22, in which the outer flap portion or portions (17) abut a cam surface (102) that is shaped to cause the cam (100) to rotate upon movement of the at least one flap (15) between the barrier position and the open position.

25. A misfuelling prevention device according to any of claims 6 to 22, in which the common release member has a shaped abutment surface (51, 94) with which the outer flap portion (17) abuts.

26. A misfuelling prevention device according to any of claims 6 to 25, in which the common release member (20, 80 and 81, 90) is arranged to move in a direction opposite to the nozzle on insertion and withdrawal of the nozzle into and out of the device respectively.

27. A misfuelling prevention device according to any preceding claim, in which the device (1) is secured to the fuelling point of a vehicle in place of the cap that covers the fuelling point.

28. A misfuelling prevention device according to any preceding claim, in which the device includes a cap (10) to seal the fuelling point.

29. A misfuelling prevention device according to any preceding claim, in which the body (2) includes bayonet fixing means (11) to secure the device (1) to the fuelling point of a vehicle.

30. A misfuelling prevention device according to any of claims 1 to 28, in which the body (2) is screw threaded to attach it to a complementary screw thread in the fuelling point.

31. A misfuelling prevention device according to any preceding claim, in which the barrier means (5) is axially aligned with the release means (6).

32. A misfuelling prevention device according to any preceding claim, in which the release elements (29) and the barrier means (5) are arranged alternately around the fuelling point.

33. A misfuelling prevention device according to any of claims 6 to 32, in which the barrier means (5) is biased to the barrier position by a spring that acts through the common release member (20, 90, 100).

## Patentansprüche

1. Fehlbetankungs-Verhinderungsvorrichtung, umfassend ein Gehäuse (2), das so angeordnet ist, dass es innerhalb des Betankungspunkts eines Motorfahrzeugs montiert ist, wobei das Gehäuse (2) umfasst: eine Bohrung (3) dort hindurch zur Aufnahme des Zapfventils (4) der Betankungspumpe und zum Zuführen von Kraftstoff zu dem Fahrzeug, an dem die Vorrichtung (1) angebracht ist;
eine Barriereeinrichtung (5), die zwischen einer Barriereposition und einer offenen Position beweglich ist, wobei in der Barriereposition verhindert wird, dass ein Zapfventil (4) einer Betankungspumpe zumindest vollständig in den Betankungspunkt eingeführt wird, und eine Freigabeeinrichtung (6), die so angeordnet ist, dass sie auf die Barriereeinrichtung (5) einwirkt, um der Barriereeinrichtung (5) zu ermöglichen, die offene Position einzunehmen und dadurch das Einführen des Zapfventils (4) zuzulassen, wobei die Freigabeeinrichtung (6) so angeordnet ist, dass sie das Öffnen der Barriereeinrichtung (5) ermöglicht, wenn ein Zapfventil (4) mit vorgegebenen Abmaßen in den Betankungspunkt eingeführt wird;
wobei die Freigabeeinrichtung (6) eine Vielzahl von Freigabeelementen (29) umfasst, die alle betätigt werden müssen, um das Öffnen der Barriereeinrichtung (5) zu ermöglichen; wobei die Freigabeelemente (29) eine Betätigungseinrichtung (28) und eine Sperreinrichtung (22, 71, 93, 110) umfassen, wobei die Sperreinrichtung (22, 71, 93, 110) so angeordnet ist, dass verhindert wird, dass sich die Barriereeinrichtung (5) von der Barriereposition in die offene Position bewegt, und wobei sich die Betätigungseinrichtung (28) in die Bohrung (3) erstreckt;
wobei die Betätigungseinrichtung (28) so angeordnet ist, dass sie ein Zapfventil (4) berührt, das in die Vorrichtung (1) eingeführt ist, und auf die Sperreinrichtung (22, 71, 93, 110) einwirkt, um die Sperreinrichtung (22, 71, 93, 110) zu entsperren und damit zu ermöglichen, dass sich die Barriereeinrichtung (5) von der Barriereposition in die offene Position bewegt;
**dadurch gekennzeichnet, dass** die Betätigungseinrichtung (28) eine sphärische Freigabekugel (28) umfasst, die in einem im Gehäuse (2) ausgebildeten, sich radial erstreckenden Kanal (27) verschiebbar ist.

2. Fehlbetankungs-Verhinderungsvorrichtung gemäß Anspruch 1, wobei die Freigabeelemente (29) umlaufend um das Gehäuse (2) gleichmäßigen Abstand aufweisen.

3. Fehlbetankungs-Verhinderungsvorrichtung gemäß Anspruch 1 oder Anspruch 2, wobei die Freigabeeinrichtung (6) drei Freigabeelemente (29) umfasst.

4. Fehlbetankungs-Verhinderungsvorrichtung gemäß Anspruch 1 oder Anspruch 2, wobei die Freigabeeinrichtung (6) vier Freigabeelemente (29) umfasst.

5. Fehlbetankungs-Verhinderungsvorrichtung gemäß einem beliebigen der vorhergehenden Ansprüche, wobei die Sperreinrichtung (22, 71, 93, 110) die Betätigungseinrichtung (28) vorspannt, sodass sie sich in die Bohrung (3) erstreckt.

6. Fehlbetankungs-Verhinderungsvorrichtung gemäß einem beliebigen der vorhergehenden Ansprüche, wobei die Freigabeelemente (29) mit der Barriereeinrichtung (5) über ein gemeinsames Freigabeglied (20, 100, 80 sowie 81, 90) zusammenwirken.

7. Fehlbetankungs-Verhinderungsvorrichtung gemäß Anspruch 6, wobei das gemeinsame Freigabeglied ein Freigabekranz (20, 80 sowie 81, 90) ist.

8. Fehlbetankungs-Verhinderungsvorrichtung gemäß Anspruch 6, wobei das gemeinsame Freigabeglied eine Nocke (100) ist.

9. Fehlbetankungs-Verhinderungsvorrichtung gemäß einem beliebigen der vorhergehenden Ansprüche, wobei die Sperreinrichtung eine Sperrnase (22) umfasst, die einen Sperrfinger (25, 93) aufweist.

10. Fehlbetankungs-Verhinderungsvorrichtung gemäß einem beliebigen der vorhergehenden Ansprüche, wobei die Sperreinrichtung einen Sperrstift (71, 110) umfasst.

11. Fehlbetankungs-Verhinderungsvorrichtung gemäß einem beliebigen der Ansprüche 6 bis 10, wobei die Sperreinrichtung (22, 71, 93, 110) am gemeinsamen Freigabeglied (20) angebracht ist.

12. Fehlbetankungs-Verhinderungsvorrichtung gemäß einem beliebigen der vorhergehenden Ansprüche, wobei die Sperreinrichtung (22, 71, 93, 110) in der Lage ist, sich so mit einem Absatz (32) zu koppeln, der einen Teil des Kanals (27) bildet, in dem die Betätigungseinrichtung (28) montiert ist, dass die Bewegung der Barriereeinrichtung (5) verhindert wird.

13. Fehlbetankungs-Verhinderungsvorrichtung gemäß einem beliebigen der vorhergehenden Ansprüche, wobei das Gehäuse (2) eine Hülse (9) und einen Kernbereich (12) umfasst, wobei der Kernbereich den darin für die Betätigungseinrichtung (28) ausgebildeten, sich radial erstreckenden Kanal (27) umfasst.

14. Fehlbetankungs-Verhinderungsvorrichtung gemäß Anspruch 13, wobei der Kernbereich (12) eine Schwenkeinrichtung (18, 53) enthält, um die Barriereeinrichtung (5) daran zu montieren.

15. Fehlbetankungs-Verhinderungsvorrichtung gemäß Anspruch 13 oder Anspruch 14, wobei das gemeinsame Freigabeglied (20, 90, 100) zwischen der Hülse (9) und dem Kernbereich (12) montiert ist.

16. Fehlbetankungs-Verhinderungsvorrichtung gemäß einem beliebigen der vorhergehenden Ansprüche, wobei die Barriereeinrichtung (5) mindestens eine Klappe (15) umfasst, die eine Barriere über der Bohrung (3) im Gehäuse (2) bildet.

17. Fehlbetankungs-Verhinderungsvorrichtung gemäß einem beliebigen der vorhergehenden Ansprüche, wobei die Barriereeinrichtung (5) drei Klappen (15) umfasst.

18. Fehlbetankungs-Verhinderungsvorrichtung gemäß einem beliebigen der vorhergehenden Ansprüche, wobei die Barriereeinrichtung (5) vier Klappen (15) umfasst.

19. Fehlbetankungs-Verhinderungsvorrichtung gemäß einem beliebigen der vorhergehenden Ansprüche, wobei die Barriereeinrichtung (5) eine Klappe (15) umfasst.

20. Fehlbetankungs-Verhinderungsvorrichtung gemäß Anspruch 14, wobei die Schwenkeinrichtung einen Drehzapfen (18) umfasst, der am Gehäuse (2) montiert ist.

21. Fehlbetankungs-Verhinderungsvorrichtung gemäß Anspruch 14, wobei die Schwenkeinrichtung einen gemeinsamen Gelenkdraht (53) umfasst, der durch jede Klappe (15) verläuft, um eine Schwenkachse auszubilden.

22. Fehlbetankungs-Verhinderungsvorrichtung gemäß einem beliebigen der Ansprüche 16 bis 21, wobei die Klappen (15) einen inneren Klappenbereich (16) und einen äußeren Klappenbereich (17) umfassen, die durch eine Schwenkachse getrennt sind, wobei der innere Klappenbereich (16) die Barriereeinrichtungen (5) bildet und der äußere Klappenbereich (17) in der Lage ist, am gemeinsamen Freigabeglied (20, 94, 100) anzuliegen.

23. Fehlbetankungs-Verhinderungsvorrichtung gemäß Anspruch 22, wobei die äußeren Klappenbereiche (17) in Schlitzen (50) aufgenommen sind, die im gemeinsamen Freigabeglied (20) ausgebildet sind.

24. Fehlbetankungs-Verhinderungsvorrichtung gemäß Anspruch 22, wobei der äußere Klappenbereich oder die -bereiche (17) an einer Nockenoberfläche (102) anliegen, die so geformt ist, dass sie die Nocke (100) zum Drehen bringt, wenn sich die mindestens eine Klappe (15) zwischen der Barriereposition und der offenen Position bewegt.

25. Fehlbetankungs-Verhinderungsvorrichtung gemäß einem beliebigen der Ansprüche 6 bis 22, wobei das gemeinsame Freigabeglied eine geformte Anlagefläche (51, 94) aufweist, an die der äußere Klappenbereich (17) stößt.

26. Fehlbetankungs-Verhinderungsvorrichtung gemäß einem beliebigen der Ansprüche 6 bis 25, wobei das gemeinsame Freigabeglied (20, 80 and 81, 90) so angeordnet ist, dass es sich beim Einführen und Herausziehen des Zapfventils in die bzw. aus der Vorrichtung in eine Richtung entgegengesetzt zum Zapfventil bewegt.

27. Fehlbetankungs-Verhinderungsvorrichtung gemäß einem beliebigen der vorhergehenden Ansprüche, wobei die Vorrichtung (1) am Betankungspunkt eines Fahrzeugs anstelle des Deckels angebracht wird, der den Betankungspunkt verschließt.

28. Fehlbetankungs-Verhinderungsvorrichtung gemäß einem beliebigen der vorhergehenden Ansprüche, wobei die Vorrichtung eine Kappe (10) enthält, um den Betankungspunkt abzudichten.

29. Fehlbetankungs-Verhinderungsvorrichtung gemäß einem beliebigen der vorhergehenden Ansprüche, wobei das Gehäuse (2) eine Bajonett-Befestigungseinrichtung (11) enthält, um die Vorrichtung (1) am Betankungspunkt eines Fahrzeugs anzubringen.

30. Fehlbetankungs-Verhinderungsvorrichtung gemäß einem beliebigen der Ansprüche 1 bis 28, wobei das Gehäuse (2) ein Schraubengewinde aufweist, um es an einem Gegen-Schraubengewinde im Betankungspunkt zu befestigen.

31. Fehlbetankungs-Verhinderungsvorrichtung gemäß einem beliebigen der vorhergehenden Ansprüche, wobei die Barriereeinrichtung (5) axial mit der Freigabeeinrichtung (6) ausgerichtet ist.

32. Fehlbetankungs-Verhinderungsvorrichtung gemäß einem beliebigen der vorhergehenden Ansprüche, wobei die Freigabeelemente (29) und die Barriereeinrichtung (5) alternierend um den Betankungspunkt angeordnet sind.

33. Fehlbetankungs-Verhinderungsvorrichtung gemäß einem beliebigen der Ansprüche 6 bis 32, wobei die Barriereeinrichtung (5) durch eine Feder, die über das gemeinsame Freigabeglied (20, 90, 100) wirkt, auf die Barriereposition vorgespannt ist.

## Revendications

1. Dispositif pour éviter les erreurs de ravitaillement en carburant comprenant un corps (2) qui est agencé pour être monté à l'intérieur du point de ravitaillement en carburant d'un véhicule à moteur, le corps (2) comprenant :
un alésage (3) pour recevoir le pistolet de distribution (4) de la pompe de carburant et délivrer le carburant au véhicule sur lequel le dispositif (1) est fixé ;
des moyens de barrière (5) mobiles entre une position de barrière et une position ouverte, dans lesquels dans la position de barrière, on empêche un pistolet de distribution (4) d'une pompe de carburant d'être inséré au moins complètement dans le point de ravitaillement en carburant et des moyens de libération (6) agencés pour agir sur les moyens de barrière (5) afin de permettre aux moyens de barrière (5) d'adopter la position ouverte et ainsi de permettre l'insertion du pistolet de distribution (4), les moyens de libération (6) étant agencés pour permettre l'ouverture des moyens de barrière (5) lorsqu'un pistolet de distribution (4) de dimensions prédéterminées est inséré dans le point de ravitaillement en carburant ;
les moyens de libération (6) comprennent une pluralité d'éléments de libération (29) qui doivent tous être actionnés pour permettre l'ouverture des moyens de barrière (5) ; les éléments de libération (29) comprenant des moyens d'actionnement (28) et des moyens de blocage (22, 71, 93, 110), les moyens de blocage (22, 71, 93, 110) étant agencés pour empêcher les moyens de barrière (5) de passer de la position de barrière à la position ouverte et les moyens d'actionnement (28) s'étendant dans l'alésage (3) ;
les moyens d'actionnement (28) étant agencés pour entrer en contact avec un pistolet de distribution (4) inséré dans le dispositif (1, et agir sur les moyens de blocage (22, 71, 93, 110) pour débloquer les moyens de blocage (22, 71, 93, 110) permettant ainsi aux moyens de barrière (5) de passer de la position de barrière à la position ouverte ;
**caractérisé en ce que** les moyens d'actionnement (28) comprennent une bille de libération sphérique (28) qui peut coulisser dans un canal (27) s'étendant de manière radiale, formé dans le corps (2).

2. Dispositif pour éviter les erreurs de ravitaillement en carburant selon la revendication 1, dans lequel les éléments de libération (29) sont espacés à égale distance de manière circonférentielle autour du corps (2).

3. Dispositif pour éviter les erreurs de ravitaillement en carburant selon la revendication 1 ou la revendication 2, dans lequel les moyens de libération (6) comprennent trois éléments de libération (29).

4. Dispositif pour éviter les erreurs de ravitaillement en carburant selon la revendication 1 ou la revendication 2, dans lequel les moyens de libération (6) comprennent quatre éléments de libération (29).

5. Dispositif pour éviter les erreurs de ravitaillement en carburant selon l'une quelconque des revendications précédentes, dans lequel les moyens de blocage (22, 71, 93, 110) sollicitent les moyens d'actionnement (28) pour s'étendre dans l'alésage (3).

6. Dispositif pour éviter les erreurs de ravitaillement en carburant selon l'une quelconque des revendications précédentes, dans lequel les éléments de libération (29) interagissent avec les moyens de barrière (5) par l'intermédiaire d'un élément de libération commun (20, 100, 80 et 81, 90).

7. Dispositif pour éviter les erreurs de ravitaillement en carburant selon la revendication 6, dans lequel l'élément de libération commun est un collier de libération (20, 80 et 81, 90).

8. Dispositif pour éviter les erreurs de ravitaillement en carburant selon la revendication 6, dans lequel l'élément de libération commun est une came (100).

9. Dispositif pour éviter les erreurs de ravitaillement en carburant selon l'une quelconque des revendications précédentes, dans lequel les moyens de blocage comprennent une languette de blocage (22) ayant un doigt de blocage (25, 93).

10. Dispositif pour éviter les erreurs de ravitaillement en carburant selon l'une quelconque des revendications précédentes, dans lequel les moyens de blocage comprennent une broche de blocage (71, 110).

11. Dispositif pour éviter les erreurs de ravitaillement en carburant selon l'une quelconque des revendications 6 à 10, dans lequel les moyens de blocage (22, 71, 93, 110) sont fixés sur l'élément de libération commun (20).

12. Dispositif pour éviter les erreurs de ravitaillement en carburant selon l'une quelconque des revendications précédentes, dans lequel les moyens de blocage (22, 71, 93, 110) sont adaptés pour se mettre en prise avec un rebord (32) faisant partie du canal (27) dans lequel les moyens d'actionnement (28) sont montés, de sorte que le mouvement des moyens de barrière (5) est empêché.

13. Dispositif pour éviter les erreurs de ravitaillement en carburant selon l'une quelconque des revendications précédentes, dans lequel le corps (2) comprend un boîtier (9) et une section de noyau (12), la section de noyau ayant le canal (27) s'étendant de manière radiale formé à l'intérieur de celle-ci pour les moyens d'actionnement (28).

14. Dispositif pour éviter les erreurs de ravitaillement en carburant selon la revendication 13, dans lequel la section de noyau (12) comprend des moyens de pivot (18, 53) pour monter les moyens de barrière (5) sur celle-ci.

15. Dispositif pour éviter les erreurs de ravitaillement en carburant selon la revendication 13 ou la revendication 14, dans lequel l'élément de libération commun (20, 90, 100) est monté entre le boîtier (9) et la section de noyau (12).

16. Dispositif pour éviter les erreurs de ravitaillement en carburant selon l'une quelconque des revendications précédentes, dans lequel les moyens de barrière (5) comprennent au moins un volet (15) qui forme une barrière sur l'alésage (3) dans le corps (2).

17. Dispositif pour éviter les erreurs de ravitaillement en carburant selon l'une quelconque des revendications précédentes, dans lequel les moyens de barrière (5) comprennent trois volets (15).

18. Dispositif pour éviter les erreurs de ravitaillement en carburant selon l'une quelconque des revendications précédentes, dans lequel les moyens de barrière (5) comprennent quatre volets (15).

19. Dispositif pour éviter les erreurs de ravitaillement en carburant selon l'une quelconque des revendications précédentes, dans lequel les moyens de barrière (5) comprennent un volet (15).

20. Dispositif pour éviter les erreurs de ravitaillement en carburant selon la revendication 14, dans lequel les moyens de pivot comprennent une broche de pivot (18) montée sur le corps (2).

21. Dispositif pour éviter les erreurs de ravitaillement en carburant selon la revendication 14, dans lequel les moyens de pivot comprennent un fil de pivot commun (53) qui passe par chaque volet (15) pour fournir un axe de pivot.

22. Dispositif pour éviter les erreurs de ravitaillement en carburant selon l'une quelconque des revendications 16 à 21, dans lequel les volets (15) comprennent une partie de volet interne (16) et une partie de volet externe (17) séparées par un axe de pivot, la partie de volet interne (16) formant les moyens de barrière (5) et la partie de volet externe (17) étant adaptée pour venir en butée contre l'élément de libération commun (20, 94, 100).

23. Dispositif pour éviter les erreurs de ravitaillement en carburant selon la revendication 22, dans lequel les parties de volet externe (17) sont reçues à l'intérieur de fentes (50) formées dans l'élément de libération commun (20).

24. Dispositif pour éviter les erreurs de ravitaillement en carburant selon la revendication 22, dans lequel la partie ou les parties de volet externes (17) viennent en butée contre une surface de came (102) qui est formée pour amener la came (100) à tourner suite aux mouvements du au moins un volet (15) entre la position de barrière et la position ouverte.

25. Dispositif pour éviter les erreurs de ravitaillement en carburant selon l'une quelconque des revendications 6 à 22, dans lequel l'élément de libération commun a une surface de butée formée (51, 94) contre laquelle la partie de volet externe (17) vient en butée.

26. Dispositif pour éviter les erreurs de ravitaillement en carburant selon l'une quelconque des revendications 6 à 25, dans lequel l'élément de libération commun (20, 80 et 81, 90) est agencé pour se déplacer dans une direction opposée au pistolet de distribution suite à l'insertion et au retrait du pistolet de distribution dans et hors du dispositif, respectivement.

27. Dispositif pour éviter les erreurs de ravitaillement en carburant selon l'une quelconque des revendications précédentes, dans lequel le dispositif (1) est fixé sur le point de ravitaillement en carburant d'un véhicule à la place du capuchon qui recouvre le point de ravitaillement en carburant.

28. Dispositif pour éviter les erreurs de ravitaillement en carburant selon l'une quelconque des revendications précédentes, dans lequel le dispositif comprend un capuchon (10) pour fermer hermétiquement le point de ravitaillement en carburant.

29. Dispositif pour éviter les erreurs de ravitaillement en carburant selon l'une quelconque des revendications précédentes, dans lequel le corps (2) comprend des moyens de fixation à baïonnette (11) pour fixer le dispositif (1) sur le point de ravitaillement en carburant d'un véhicule.

30. Dispositif pour éviter les erreurs de ravitaillement en carburant selon l'une quelconque des revendications 1 à 28, dans lequel le corps (2) est vissé pour le fixer sur un filetage de vis complémentaire dans le point de ravitaillement en carburant.

31. Dispositif pour éviter les erreurs de ravitaillement en carburant selon l'une quelconque des revendications précédentes, dans lequel les moyens de barrière (5) sont alignés de manière axiale avec les moyens de libération (6).

32. Dispositif pour éviter les erreurs de ravitaillement en carburant selon l'une quelconque des revendications précédentes, dans lequel les éléments de libération (29) et les moyens de barrière (5) sont agencés de manière alternée autour du point de ravitaillement en carburant.

33. Dispositif pour éviter les erreurs de ravitaillement en carburant selon l'une quelconque des revendications 6 à 32, dans lequel les moyens de barrière (5) sont sollicités dans la position de barrière par un ressort qui agit par le biais de l'élément de libération commun (20, 90, 100).
